# EUROPÄISCHE PATENTSCHRIFT

(11) **EP 0 410 553 B1**
(45) Veröffentlichungstag und Bekanntmachung des Hinweises auf die Patenterteilung: **08.03.1995**
(21) Anmeldenummer: 90250191.5
(22) Anmeldetag: 25.07.1990
(51) Int. Cl.: B27N 7/00, B29C 45/14

(54) **Verfahren zum Herstellen von kaschierten Formteilen**
Method for the production of lined and formed articles
Procédé pour fabriquer des objets formés et revêtus

(30) Priorität: 26.07.1989 DE 3924751; 19.07.1990 DE 4023209
(43) Veröffentlichungstag der Anmeldung: 30.01.1991
(60) Teilanmeldung: 93250346.9
(73) Patentinhaber: LIGNOTOCK GmbH, D-36205 Sontra (DE)
(72) Erfinder: Nicolay, Albert, Dr., D-3446 Meinhard-Neuerode (DE)
(74) Vertreter: Pfenning, Meinig & Partner

(56) Entgegenhaltungen:
- EP-A- 0 223 625
- EP-A- 0 288 130
- US-A- 3 576 049
- US-A- 3 914 475
- PATENT ABSTRACTS OF JAPAN, Band 13, Nr. 265, (M-839)[3613], 19. Juni 1989; & JP-A-1 64 817 (TAKASHI OGURI) 10-03-1989

## Beschreibung

Die Erfindung betrifft ein Verfahren zum Herstellen von kaschierten Formteilen gemäß dem Oberbegriff des Anspruches 1.

Es ist bekannt, derartige Formteile unter Verwendung von Haftvermittlern mit thermoplastisch verformbaren Folien, vorzugsweise durch Ansaugen der erwärmten Thermoplastfolie an die Trägerteile, zu kaschieren. Hierfür werden die Trägerteile und/oder die Folie haftmittelbeschichtet. Auch für den Fall, daß mehrere Beschichtungswerkstoffe vorgesehen sind, wurde bisher dieses Verfahren beibehalten. Insbesondere wird dann, wenn in eine Folienkaschierung ein Stoffinsert einzusetzen ist, zunächst dieses Insert als Zuschnitt mit Hilfe eines Haftvermittlers aufkaschiert, danach das ganze Formteil mit einer Thermoplastfolie mittels des genannten Vakuumtiefziehverfahrens überkaschiert und in einem nachfolgenden Arbeitsgang Folie und Gewebe am Umriß des Stoffinsertes verschweißt, falls das Gewebe schweißbar ist. Vorteilhaft bedient man sich in diesem Zusammenhang der Hochfrequenzschweißung. Anschließend wird dann die Folie über dem Gewebe entfernt, wobei dieser Vorgang als sogenanntes Spiegelreißen bezeichnet wird.

Dieses Verfahren ist aufwendig und abfallintensiv. Es ist darüber hinaus nur dann anzuwenden, wenn beide Kaschierwerkstoffe schweißfähig sind. Auch sind Verfahren bekannt geworden, bei denen der Abfall dadurch reduziert wurde, daß die unterschiedlichen Kaschierwerkstoffe vor dem Kaschieren vorverbunden werden (EP 0 145 832). Schließlich werden bei einem weiteren bekannten Verfahren zwei Zuschnitte der unterschiedlichen Kaschierwerkstoffe während des Kaschierens durch besondere Haltevorrichtungen auf dem Formteil fixiert (DE-OS 31 09 338), wobei die Thermoplastkaschierung eine vorgefertigte Folie, aus der Zuschnitte angefertigt werden, ist, so daß hierdurch möglichst Material eingespart werden kann. Dabei können aber erhebliche Produktionsabfälle auftreten. In den bekannten Fällen wird unter Zuhilfenahme eines Haftvermittlers der Kaschiervorgang ausgeführt, was sowohl die Produktionskosten erhöht, als auch - im Falle lösungsmittelhaltiger Haftvermittler - umweltbelastende Auswirkungen hat. Zur Kaschierung mit Thermoplastfolien werden fast ausschließlich PVC-Folien verwendet, die wegen der Weichmacherausdünstungen und wegen ihrer Umweltschädlichkeit nur sehr kostenaufwendig beseitigt werden können. Maßgebend für ihren Einsatz ist dabei ihre hervorragende Schweißfähigkeit, die vor allem beim Kaschieren mit unterschiedlichen Werkstoffen entlang der Trennlinie die Ausbildung von sauberen Schweißverbindungen und Ziernähten ermöglicht. Der an sich wünschenswerte Einsatz von Alternativwerkstoffen scheiterte bisher vor allem an ihrer mangelnden Schweißbarkeit.

Ein weitgehend abfalloses Beschichten von hölzernen Möbelteilen, wie beispielsweise Stuhlbeine, ist in der US-A-3 914 475 beschrieben. Darin wird als Beschichtungsmethode auch das Spritzgießen angegeben. Die Geometrie dieser Teile ist dabei aber so beschaffen, daß längere Fließwege beim Ummanteln durch Spritzgießen nicht auftreten, so daß die Fließwiderstände beim Spritzgießen verhältnismäßig gering bleiben. Im Gegensatz dazu müssen bei Innenverkleidungsteilen für Fahrgastzellen großflächige Teile mit einer dünnen Beschichtung versehen werden und die hierbei im Spritzgießwerkzeug auftretenden Fließwiderstände sind erheblich. Auch bei einem zweiten bekannt gewordenen Beschichtungsverfahren durch Spritzgießen (JP-A-164 817) treten verfahrensbehindernde größere Fließwiderstände nicht auf, da in diesem Fall eine dekorative Holzoberfläche mit einem Kunststofformkörper hinterspritzt wird, der verhältnismäßig voluminös ist.

Vorteilhafte Ausgestaltungen und Weiterbildungen dieses Verfahrens ergeben sich aus den Unteransprüchen.

Das Kaschieren von Formteilen in dünnen Schichten durch das nahezu abfallose Beschichten im Spritzgießverfahren wurde bislang für nicht durchführbar gehalten, da über die vorhandenen großen Oberflächen lange Fließwege benötigt werden, und die Dicke der Beschichtung verhältnismäßig gering ist. Unter diesen Bedingungen ist mit so hohen Fließwiderständen beim Spritzgießen zu rechnen, daß das Verfahren als nicht durchführbar galt. Überraschenderweise wurde nun gefunden, daß die Fließwiderstände durch das Anwärmen der Trägerteile so weit gesenkt werden können, daß auch ein großflächiges Beschichten entsprechender Formteile im Spritzgießverfahren unter Einhaltung bestimmter Bedingungen möglich wird, Voraussetzung ist allerdings, daß das Trägerteil bei den anzuwendenden Temperaturen noch hinreichend formstabil bleibt, wie das für verpreßte, bindemittelhaltige Holzwerkstoffe gegeben ist.

Die Durchführung des Verfahrens umfaßt das Erwärmen der Trägerteile auf 120 - 180 °C, das Einlegen der Trägerteile in eine Spritzgießform, deren eineformhälfte das Trägerteil rückwärtig abstützt, während die andere Formhälfte die gewünschte Sichtflächenkontur der Kaschierung enthält. Dabei muß eine gegebenenfalls unterschiedliche Dicke der Kaschierungsschicht in das Spritzgießwerkzeug abstandsgebend eingearbeitet sein, was für das Produkt einen erheblichen Vorteil gegenüber der Folienkaschierung erbringt. Nach dem Schließen der Preßform wird der erwärmte und plastifizierte Thermoplastwerkstoff der Kaschierung injiziert. Der oder die Injektionsort(e) wird/werden dabei zweckmäßigerweise in Bereiche des Formteiles verlegt, in denen später durch Stanzungen Ausschnitte angebracht werden, so daß sich der "Anguß" am Fertigteil nicht störend bemerkbar macht. Die Entnahme des durch Spritzgießen nunmehr fertig beschichteten Formteiles kann kurz nach Abschluß der Injektion im noch warmen Zustand des Trägerteiles erfolgen. Da das Trägerteil selbst in der Wärme formstabil bleibt und die Thermoplastschicht stabilisiert, muß deren Verfestigung durch Erkalten nicht abgewartet werden, so daß kurze Taktzeiten beim Beschichten möglich sind.

Das beschriebene Verfahren kann vorteilhaft weitergebildet werden. So ist es beispielsweise möglich, daß die die Sichtseite bildende Formhälfte des Spritzgießwerkzeuges reliefartig ausgebildet ist, beispielsweise nach Art einer Ledernarbung. Gegenüber dem zum Stand der Technik gehörenden Einsatz von vorgenarbten Kaschierungsfolien hat dies den wesentlichen Vorteil, daß kein Musterverzug beim Kaschieren auftritt, wie er beim Tiefziehen der Tiefziehfolien üblich und störend ist. Eine weitere vorteilhafte Möglichkeit besteht darin, daß einzelne Bereiche der Sichtseite - wie beispielsweise Griffmulden, Durchbrüche für Fensterkurbeln, Kartentaschen und dergleichen - durch Ringwülste, Wulststege oder ähnliche Gestaltungselemente optisch betont werden können. Hierdurch erweitert sich die Gestaltungsmöglichkeit gegenüber der Verwendung von Tiefziehfolie nach dem Stand der Technik. Der heute noch übliche zusätzliche Aufwand an Montagebauteilen, wie beispielsweise Zierringen, kann entfallen. Häufig werden an den Formteilen der beschriebenen Art "Polstereffekte" gewünscht, die bisher vor allem dadurch hergestellt werden, daß auf das Formteil Schaumformteile aufmontiert oder angeschäumt werden, die dann überkaschiert werden müssen. Derartige Polsterbereiche lassen sich durch entsprechende Gestaltung des Spritzgießwerkzeuges mit dem erfindungsgemäßen Verfahren vereinfacht dadurch fertigen, daß das thermoplastische Beschichtungsmaterial wenigstens für die betreffenden Bereiche ein Schaumtreibmittel enthält. Während in der dünnen Schicht der flächigen Beschichtung des Formteiles bei durchgehender Verwendung einer entsprechenden Spritzgußmischung das Aufschäumen des Thermoplasten unterbleibt, erhält man in den mit größerem Abstand konturierten Werkzeugbereichen den gewünschten "Polstereffekt"

Ein weiterer Vorteil ergibt sich, wenn das erfindungsgemäße Verfahren dadurch weitergebildet wird, daß die Kontur des Spritzgießwerkzeuges so ausgebildet ist, daß das Trägerteil randumgreifend beschichtet wird. Hierdurch wird zum einen das bisher verfahrenstechnisch relativ aufwendige Umbugen der Kaschierfolie überflüssig, zum anderen kann das Entgraten des Trägerteiles entfallen, da eventuell vorhandene Gratunregelmäßigkeiten eingespritzt bzw. umspritzt werden. Die Produktionskosten lassen sich hierdurch erheblich senken.

Auch bei Kaschierungen mit unterschiedlichen Werkstoffen bietet das erfindungsgemäße Verfahren dann Vorteile, wenn zunächst der Bereich, in dem eine nichtspritzgießfähige Kaschierung beispielsweise ein Gewebe, in Teilbereichen der Kaschieroberfläche vorgesehen ist, wobei mit einem Zuschnitt des nichtspritzfähigen kaschierungswerkstoffes kaschiert wird, der geringfügig größer ist als sein späterer Sichtbereich. Dieser Sichtbereich wird nach dem vorliegenden Verfahren durch eine seiner Kontur folgende messerschneidenähnliche Dichtleiste von dem Injektionsbereich des Spritzgießwerkzeuges getrennt, wobei ein Überstand der Vorkaschierung in den Injektionsraum des Spritzgießwerkzeuges hineinragt, so daß dieser Überstand in die Spritzgußmasse eingebettet und sauber begrenzt wird: Verbindungsnähte durch Schweißen können entfallen, gewünschte Ziernähte lassen sich in das Spritzgießwerkzeug mit einarbeiten und werden angespritzt. Für diese Verfahrensweise lassen sich alle thermoplastisch verformbaren Werkstoffe zum Kaschieren einsetzen , die spritzgießfähig sind. Die unabdingbare Forderung nach der Schweißfähigkeit der Kaschierungswerkzeuge, die nach dem Stand der Technik noch die Werkstoffauswahl begrenzt, entfällt. Bei geeigneter Kombination eines an sich bekannten Kaschierungswerkzeuges mit dem entsprechenden Spritzgießwerkzeug, können beide Teilkaschierungen näherungsweise zeitgleich vorgenommen werden.

Die Erfindung wird nachfolgend anhand der beiliegenden Figuren nur beispielsweise beschrieben und erläutert.

Es zeigen:
- Fig. 1: eine schematische Schnittdarstellung der Gesamtkonfiguration beim erfindungsgemäßen Spritzbeschichten mit einem einheitlichen Beschichtungswerkstoff,
- Fig. 2: erläutert die Möglichkeit, ein Stoffinsert, das nur Teilbereiche des Formteiles abdeckt, mit einer Spritzbeschichtung der Restoberflächen zu kombinieren.

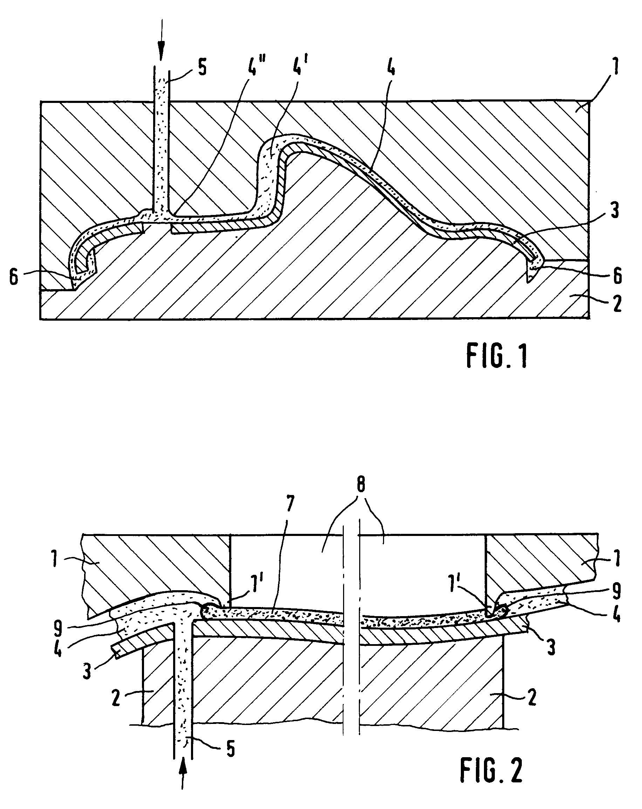

Wie in Figur 1 wie dergegeben, enthält das Oberwerkzeug 1 des Spritzgießwerkzeuges die Sichtkontur des fertigbeschichteten Formteils. Das Unterteil 2 des Spritzgießwerkzeuges nimmt das Trägerteil 3 formschlüssig stützend auf. Die Kontur des Oberwerkzeuges 1 folgt nur teilweise der Kontur des Trägerteils 3. In den Bereichen 4′ ist der Spritzgießspalt größer als in den übrigen Formteilbereichen, um hier eine griffige Polsterauflage zu ermöglichen. Dies ist vor allem dann vorteilhaft, wenn der Beschichtungswerkstoff Schaumtreibmittel enthält. Das dargestellte Formteil ist ein Schnitt durch ein Seitenverkleidungsteil einer Automobiltür. Im Bereich 4˝ weicht die Kontur des Oberwerkzeuges 1 ebenfalls von der Kontur des eigentlichen Formteiles ab, wobei um den Formteildurchbruch an dieser Stelle eine Ringwulst von dem Beschichtungswerkstoff gebildet wird. Der Injektionskanal 5, durch den in Pfeilrichtung injiziert wird, wird zweckmäßigerweise in den Formteilbereichen angeordnet, in denen später Durchbrüche vorgesehen sind. In dem Randbereich 6 des Formteiles enthält das Spritzgießwerkzeug ebenfalls Konturabweichungen und zwar derart, daß der Beschichtungswerkstoff den Rand des Trägerteiles umgreift. Ähnlich randumgreifend ist auch der Bereich 4˝ des Fensterkurbelbereiches ausgebildet. Diese Maßnahme ist aus mehreren Gründen vorteilhaft. Zum einen erübrigt sich das Entgraten des Trägerteiles, zum anderen läßt sich dieser randumgreifende Bereich so ausbilden, daß er Dichtlippengestalt annimmt und somit für eine dichte, quietsch- und klapperfreie Anlage an der Karosserie sorgt. Schließlich versiegelt die randumgreifende Beschichtung auch noch die Schnittkanten gegen Feuchtigkeitseinfluß. In der Figur 1 sind Bauelemente, wie beispielsweise Führungsstollen des Spritzgießwerkzeuges, Kanäle für Heiz- oder Kühlmittel und ähnliche Bauelemente der Übersichtlichkeit wegen nicht mit dargestellt.

Fig. 2 erläutert die Möglichkeit der Kombination einer Spritzgießbeschichtung mit einem Stoffinsert und zwar anhand einer Ausschnittdarstellung. Die Benennung der Bauelemente entspricht der in Fig. 1. Das Unterwerkzeug 2 stützt, wie schon beschrieben, das Trägerteil 3 ab, das in einem Teilbereich (der Übersichtlichkeit halber verkürzt dargestellt) das Stoffinsert 7 als Vorkaschierung trägt. Das Oberwerkzeug 1 besitzt im Bereich dieser Vorkaschierung eine fensterähnliche Öffnung 8, deren Rand der späteren Trennungskontur von Stoffinsert und Spritzgießbeschichtung folgt. Der Kontur des Stoffinsertes folgend ist das Oberwerkzeug 1 als Quetschkante 1′ ausgebildet, die für eine Abdichtung des Insertbereiches gegen den Injektionsbereich sorgt. Die hohe Flächenpressung dieser Quetschkante verhindert ein Übertreten des Beschichtungswerkstoffes in das Gewebe. Das Stoffinsert ragt dabei mit dem Überstand 9 in den Injektionsraum der Spritzgießbeschichtung hinein, so daß dieser Überstand konturgenau und sauber in die Spritzgießbeschichtung eingebettet und fixiert wird. Eine zusätzliche Schweißverbindung zwischen beiden Beschichtungswerkstoffen, wie sie zum Stand der Technik gehört, entfällt dabei. In Fig. 2 ist auch eine andere Möglichkeit der Injektion des Beschichtungswerkstoffes aufgezeigt:

Hier ist der Angußkanal 5 in das Unterteil 2 des Spritzgießwerkzeuges eingearbeitet und die Beschichtung erfolgt durch das an dieser Stelle mit einem Durchbruch versehene Trägerteil 3, so daß die Angußstelle später auf der Rückseite des fertigen Formteiles angeordnet ist. In Folge des fensterähnlichen Durchbruches 8 im Oberwerkzeug wird dabei das Stoffinsert nicht mechanisch belastet und hat keine Berührung mit irgendwelchen Werkzeugteilen: Die Stoffstruktur wird nicht beschädigt, eine Beschmutzung des Insertes durch das Oberwerkzeug bleibt ausgeschlossen .

Die Fig. 1 und 2 sind beispielsweise, andere Anordnungen sind möglich. So kann es zum Beispiel zweckmäßig sein, mehrere Angußöffnungen vorzusehen. Eine weitere vorteilhafte Möglichkeit besteht darin, daß durch die Fensteröffnung 8 in Fig. 2 ein Kaschierungsstempel derart geführt wird, daß die Insertkaschierung und das Spritzgießen näherungsweise zeitgleich durchgeführt werden können.

## Patentansprüche

1. Verfahren zum Herstellen von kaschierten Formteilen zur Innenverkleidung der Fahrgastzellen von Automobilen, bestehend aus einem temperaturunabhängig formstabilen Trägerteil aus bindemittelhaltigen verpreßten Holzfaserwerkstoffen oder dergleichen und einer sichtseitigen festhaftend mit dem Trägerteil verbundenen, gegebenenfalls mehrteiligen Kaschierung, wobei die Kaschierung wenigstens in Teilabschnitten aus einem thermoplastisch verformbaren Werkstoff besteht und die thermoplastische Kaschierung durch Spritzgießbeschichten des Trägerteils in einem geschlossenen Spritzgießwerkzeug aufgebracht wird, dadurch gekennzeichnet, daß das Trägerteil auf 120 - 180°C erwärmt und anschließend in das Spritzgießwerkzeug eingelegt wird.

2. Verfahren nach Anspruch 1, dadurch gekennzeichnet, daß die eine Formhälfte des Spritzgießwerkzeugs das eingelegte Trägerteil rückseitig abstützt, wobei die formgebende Oberfläche der anderen Formhälfte die gewünschte Sichtflächenkontur der Kaschierung aufweist, so daß gegebenenfalls in das Spritzgießwerkzeug abstandsgebend eingearbeitete unterschiedliche Dicken für die Kaschierungsschicht entstehen, daß der erwärmte und plastifizierte thermoplastische Kaschierwerkstoff in das geschlossene Spritzwerkzeug injiziert wird und daß das durch Spritzgießen fertig beschichtete Formteil im noch warmen Zustand das Trägerteil aus dem erneut geöffneten Spritzgießwerkzeug entnommen wird.

3. Verfahren nach Anspruch 1, dadurch gekennzeichnet, daß die die Sichtseite bildende Formhälfte nach Art einer Ledernarbung oder dergleichen oberflächenkonturiert reliefartig ausgebildet wird.

4. Verfahren nach wenigstens einem der Ansprüche 1 bis 3, dadurch gekennzeichnet, daß die Sichtseite des Formteils in Bereichen, wie Griffmulden,Durchbrüche für Fensterkurbeln, Kartentaschen und dergleichen - durch Ringwülste, Wulststege oder ähnliche Gestaltungselemente reliefartig ausgebildet werden.

5. Verfahren nach mindestens einem der Ansprüche 1 bis 4, dadurch gekennzeichnet, daß die die Sichtseite bildende Werkzeughälfte in Bereichen mit Polstereffekt für das kaschierte Formteil auf vergrößertem Abstand zwischen Trägerteil und Formteil gehalten wird, und daß wenigstens für diese Bereiche dem thermoplastischen Kaschierwerkstoff ein Schaumtreibmittel zugesetzt wird.

6. Verfahren nach mindestens einem der Ansprüche 1 bis 5, dadurch gekennzeichnet, daß das Trägerteil randumgreifend durch geeignete Konturierung des Spritzgießwerkzeuges beschichtet wird.

7. Verfahren nach mindestens einem der vorangegangenen Ansprüche, dadurch gekennzeichnet, daß mindestens eine Werkzeughälfte des Spritzgießwerkzeuges temperiert wird.

8. Verfahren nach Anspruch 1, dadurch gekennzeichnet, daß zunächst der Bereich, in dem eine nichtspritzgießfähige Kaschierung, wie ein Gewebe oder dergleichen vorgesehen wird, in an sich bekannter Weise mit einem Zuschnitt dieses Kaschierwerkstoffes beaufschlagt wird, wobei der Kaschierzuschnitt geringfügig größer gewählt wird als sein späterer Sichtbereich, und daß dieser Sichtbereich durch eine seiner Kontur folgende messerschneidenähnliche Dichtleiste von dem Injektionsbereich derart getrennt wird, daß ein Überstand der Vorkaschierung in den Injektionsraum des Spritzgießwerkzeuges hineinragt.

9. Verfahren nach Anspruch 1, dadurch gekennzeichnet, daß ein an sich bekanntes Kaschierwerkzeug mit einem Spritzgießwerkzeug derart zusammenwirkt, daß beide Teilkaschierungen näherungsweise zeitgleich vorgenommen werden.

## Claims

1. A process for the manufacture of lined shapes for interior panelling of passenger cabins in automobiles, comprising a support element, the shape of which is stable independent of temperature and made of compressed wood fibre materials containing bonding agents or the like, and a lining, if appropriate in a plurality of sections, fixed to the visible side and attached to the support element, and that the lining is made, at least in some sections, of a thermo-plastically deformable material, and the thermo-plastic lining is applied by injections moulding of the support element in a sealed injection-moulding tool, **characterized in that** the support element is heated to 120 - 180 °C and thereafter placed in the injection-moulding tool.

2. A process according to claim 1, **characterized in that** the one half of the shape of the injection-moulding tool supports the inserted support element at the rear, and that the shape-giving surface of the other half of the shape has the desired contour of the visible surface of the lining, so that, if appropriate, different thicknesses for the lining layer are established which are worked into the injection-moulding tool so as to set the distance, that the heated and plasticized thermo-plastic lining material is injected into the sealed injection tool, and the shape section, which has been fully coated by way of injection moulding, is removed from the opened up injection-moulding tool whilst the support element is still hot.

3. A process according to claim 1, **characterized in that** the half of the shape which forms the visible side is given a relief-like surface structure like leather grain or the like.

4. A process according to at least one of claims 1 to 3, **characterized in that** the visible side of the shape section has in certain areas, like those of handle moulds, openings for window cranks, card pockets and the like, relief-like annual beads, bead webs or similar shaping element.

5. A process according to at least one of claims 1 to 4, **characterized in that** the tool half which forms the visible side is in areas with upholstery effect for the lined shape section kept at an increased distance between support element and shape element, and that at least for these regions a foaming material is added to the thermoplastic lining material.

6. A process according to at least one of claims 1 to 5, **characterized in that** the support element is coated by way of suitable contouring by way of the injection-moulding tool so as to encompass the edge.

7. A process according to at least one of the above claims, **characterized in that** at least one half of the injection-moulding tool is heated.

8. A process according to claim 1, **characterized in that** initially the area in which a non-injection-mouldable lining is provided, such as a fabric or the like, is in a conventional manner given a shape of this lining material, and that the lining shape is slightly larger than its later visible area, and that this visible area is separated from the injection area by a knifeblade-like sealing ledge which follows its contour, and that an extension of the prelining protrudes into the injection chamber of the injection-moulding tool.

9. A process according to claim 1, **characterized in that** a conventional lining tool co-acts with an injection-moulding tool in such a manner that both partial linings are processed at virtually the same time.

## Revendications

1. Procédé pour fabriquer des objets formés et revêtus pour l'habillage interne d'habitacles d'automobiles constitués par une pièce support en forme stable à la température réalisée en matière à base de fibres de bois comprimées contenant un liant ou analogue et un revêtement éventuellement en plusieurs parties disposées du côté visible et lié à la pièce support, ledit revêtement étant constitué au moins partiellement par un matériau thermo-plastique déformable et le revêtement thermo-plastique étant réalisé dans un outillage d'injection fermé par formation de couches injectées, caractérisé en ce que la pièce support est échauffée jusqu'à 120 à 180°C et ensuite introduite dans l'outillage injection.

2. Procédé selon la revendication 1, caractérisé en ce que l'un des demi-moule de l'outillage d'injection soutient par l'arrière la pièce support introduite, la forme de l'autre demi-moule présentant le contour souhaité de la surface visible du revêtement, de sorte qu'il en résulte éventuellement dans l'outillage d'injection fermé une empreinte à épaisseur variable pour constituer des couches de revêtement, de différentes épaisseurs, en ce que le matériau de revêtement thermo-plastique échauffé et plastifié est injecté dans l'outillage d'injection fermé et en ce que la pièce terminée fraîchement revêtue par injection et encore à l'état chaud du support est extraite de l'outillage d'injection ouvert à nouveau.

3. Procédé selon la revendication 1, caractérisé en ce que le demi-moule engendrant la face visible présente en surface un grain du genre cuir ou analogue.

4. Procédé selon l'une au moins des revendications 1 à 3, caractérisé en ce que le côté visible de la pièce en forme est réalisé dans des zones telles que des empreintes de poignées, des traversées pour manivelles de fenêtres, des poches à cartes, etc... par des bourrelets périphériques, des nervures en reliefs ou d'autres éléments décoratifs en relief.

5. Procédé selon l'une ou moins des revendications 1 à 4, caractérisé en ce que le demi-moule formant la face visible est maintenu à des distances agrandies entre pièce-support et pièce formée dans des zones qui ont un effet de matelassage pour la pièce formée revêtue et en ce qu'au moins pour ces zones on rajoute au matériau thermo-plastique de revêtement un produit d'expansion.

6. Procédé selon l'une au moins des revendications 1 à 5, caractérisé en ce que la pièce support est revêtue sur tout son pourtour grâce à un contour approprié de l'outillage d'injection.

7. Procédé selon l'une au moins des revendications qui précèdent, caractérisé en ce qu'au moins une moitié de l'outillage d'injection est tempérée.

8. Procédé selon la revendication 1, caractérisé en ce que la zone dans laquelle est prévue un revêtement non injectable tel qu'un textile ou analogue est de façon connue revêtue d'abord avec une pièce découpée dans ledit matériau de revêtement, la pièce de revêtement ainsi découpée étant choisie légèrement plus grande en surface que sa partie visible future et en ce que cette zone visible est séparée de la zone injectée par une nervure en forme de lame de couteau suivant son contour de telle façon qu'un débordement du pré-revêtement pénètre dans la zone d'injection de l'outillage à injecter.

9. Procédé selon la revendication 1, caractérisé en ce qu'un outillage de revêtement connu coopère avec un outillage d'injection de telle façon que les deux revêtements partiels puissent être réalisés sensiblement simultanément.
